(19) **Europäisches Patentamt**

**European Patent Office**

**Office européen des brevets**

(11) **EP 1 067 233 B1**

(12) **EUROPÄISCHE PATENTSCHRIFT**

(45) Veröffentlichungstag und Bekanntmachung des Hinweises auf die Patenterteilung:
**08.09.2004  Patentblatt 2004/37**

(51) Int Cl.$^7$: **D06F 39/00**

(21) Anmeldenummer: **00111773.8**

(22) Anmeldetag: **03.06.2000**

(54) **Verfahren zur Messung der Beladung einer Wäschetrommel**

Method for measuring the load in a washing machine drum

Procédé pour déterminer la charge d'un tambour de machine à laver

(84) Benannte Vertragsstaaten:
**AT BE CH CY DE DK ES FI FR GB GR IE IT LI LU MC NL PT SE**

(30) Priorität: **23.06.1999  DE 19928657**

(43) Veröffentlichungstag der Anmeldung:
**10.01.2001  Patentblatt 2001/02**

(73) Patentinhaber: **Diehl AKO Stiftung & Co. KG
88239 Wangen (DE)**

(72) Erfinder: **Weinmann, Martin
88339 Bad Waldsee (DE)**

(74) Vertreter: **Diehl Patentabteilung
c/o Diehl Stiftung & Co. KG
Stephanstrasse 49
90478 Nürnberg (DE)**

(56) Entgegenhaltungen:
**DE-A- 4 038 178        DE-A- 4 431 846
DE-A- 19 857 903**

**Beschreibung**

Die Erfindung betrifft ein Verfahren zur Messung der Beladung einer Wäschetrommel einer Waschmaschine oder eines Wäschetrockners.

Zur Optimierung des Wasch- oder Trockenvorgangs ist es vorteilhaft, wenn die Steuerelektronik der Waschmaschine oder des Wäschetrockners die jeweilige Beladung der Wäschetrommel erkennt. Denn dann lassen sich verfahrenstechnische Größen, wie Wasserfüllung, Waschmittelzufuhr, Drehzahlen und zeitliche Schaltvorgänge, auf die jeweilige Beladung abstimmen. Damit sind bei optimalen Waschergebnissen Ersparnisse möglich.

Bei der Rotation der Wäschetrommel treten aufgrund der möglichen Unwucht der Wäscheverteilung Reibungen im Aufhängungssystem der Trommel und den Reibungsdämpfern auf. Neben der Lagerreibung treten auch infolge von Schaumbildung oder sonstigen Einflüssen, beispielsweise alterungsbedingten Verschleißerscheinungen, zusätzliche Reibungskoeffizienten auf. Diese Erscheinungen werden als "Maschinenreibung" bezeichnet. Die Maschinenreibung kann exemplarbedingt und alterungsbedingt stark schwanken. Wird die Maschinenreibung zur Messung der Beladung herangezogen, dann ist mit ungenauen Meßergebnissen zu rechnen.

In der DE 44 31 846 A1 ist ein Verfahren der eingangs genannten Art beschrieben, bei dem sich die Maschinenreibung auf die Beladungsmessung nicht wesentlich auswirken soll. Es wird bei beladener, wenigstens mit Anlegedrehzahl rotierender Wäschetrommel zunächst das für das Aufrechterhalten einer konstanten Drehzahl vom Motor der Wäschetrommel aufzubringende Drehmoment gemessen. Dann wird das bei einer Beschleunigung der Wäschetrommel sich ergebende Drehmoment ermittelt. Die Steuerelektronik ermittelt aus diesen beiden Drehmomenten die Beladung der Wäschetrommel und bildet einen Stellgröße für die weitere Steuerung der Waschmaschine oder des Wäschetrockners. Während der Messungen des Drehmoments bei konstanter Drehzahl und während der Messung des Drehmoments bei der Beschleunigung wird die Wäsche zwangsläufig entwässert, was zur Folge hat, daß sich die Trägheitsmomente während der Messung verändern. Dies beeinflußt das Meßergebnis ungünstig. Außerdem muß der Gradient der Drehzahlzunahme bei der Beschleunigungsmessung bei nasser Wäsche nach oben begrenzt werden, weil bei einer zu schnellen Drehzahlzunahme die Wäsche so schnell entwässern würde, daß zusätzlich die Messung negativ beeinflussende Reibdrehmomente entstehen würden.

In der DE 34 16 639 A1 ist ein Verfahren zur Steuerung des Schleuderprogramms einer Waschmaschine beschrieben. In einer im Schleuderprogramm vorbestimmten Hochlaufphase wird die Unwucht und die für den Hochlaufbereich benötigte Zeit gemessen. Auch dabei treten die genannten Meßungenauigkeiten auf.

In der DE 40 38 178 A1 ist ein Verfahren zur Unwuchtmessung beschrieben. Die Massenträgheit der Wäschetrommel wird während einer Auslaufphase der Wäschetrommel gemessen. Während der Auslaufphase wirkt nur die Maschinenreibung, die wie oben ausgeführt exemplarbedingt und alterungsbedingt stark schwanken kann, so daß sich aus dem Drehzahlverlauf der Auslaufphase kaum ein genauer Wert für die Beladung der Wäschetrommel ableiten läßt.

Aus der DE 198 57 903 A1, die als nächstliegender Stand der Technik angesehen wird, ist ein weiteres Verfahren zur Ermittlung der Wäschemenge in der Trommel einer Waschmaschine oder eines Trockners bekannt. Die Ermittlung der Wäschemenge erfolgt dabei über zwei aufeinander folgende Betriebsphasen. Es handelt es sich dabei um eine Beschleunigungs- und eine anschließende Bremsphase mit gleicher zeitlicher Länge. Durch ein relativ aufwändiges Aufintegrieren bzw. Aufsummieren einer drehmomentabhängigen Stellgröße der Drehzahlregelung über der Zeit wird ein Trägheitsmoment der Wäsche ermittelt. Dabei wird jedoch nicht berücksichtigt, dass es während der Beschleunigungsphase zu einer Entwässerung der Wäsche und damit zu einer Veränderung des Trägheitsmoments kommt. Während der Bremsphase entfallen zwar die verfälschenden Einflüsse der Entwässerung, das Messergebnis für das Trägheitsmoment der Wäsche ist aber dennoch falsch, weil es sich auch aus der vorangegangenen Beschleunigungsphase zusammensetzt. Darüber hinaus wird bei diesem Verfahren nicht berücksichtigt, dass die schwere bzw. feuchte Wäsche die Effekte der Maschinenreibung anders, nämlich stärker beeinflusst, als die leichtere (entwässerte) Wäsche. Dies bedingt eine weitere Verfälschung des Messergebnisses für das Trägheitsmoment der Wäsche, da auch die Entwässerungsphase zu dessen Ermittlung beiträgt.

Aufgabe der Erfindung ist es, ein Verfahren der eingangs genannten Art anzugeben, das zu möglichst exakten Meßergebnissen insbesondere dadurch führt, daß die Entwässerung der Wäsche und die Maschinenreibung möglichst wenig in das Meßergebnis eingehen.

Erfindungsgemäß ist obige Aufgabe durch die Merkmale des kennzeichnenden Teils des Anspruchs 1 gelöst.

Die Messung erfolgt dabei während die Wäschetrommel vom Motor aktiv abgebremst wird. Beim Abbremsen der Wäschetrommel tritt keine wesentliche Entwässerung der Wäsche auf, so daß sich die nur schwer definierbare Entwässerung auch nicht auf das Meßergebnis auswirkt. Da der Messung ein aktives Bremsen des Motors mit einem erfaßbaren Bremsmoment zugrunde liegt, wirkt sich die beladungsbedingte, exemplarbedingte und alterungsbedingte Maschinenreibung nicht wesentlich auf die Messung aus. Vorzugsweise ist hier das durch elektrische Bremsung des Motors aufgebrachte Bremsmoment wesentlich größer als das Moment der Maschinenreibung.

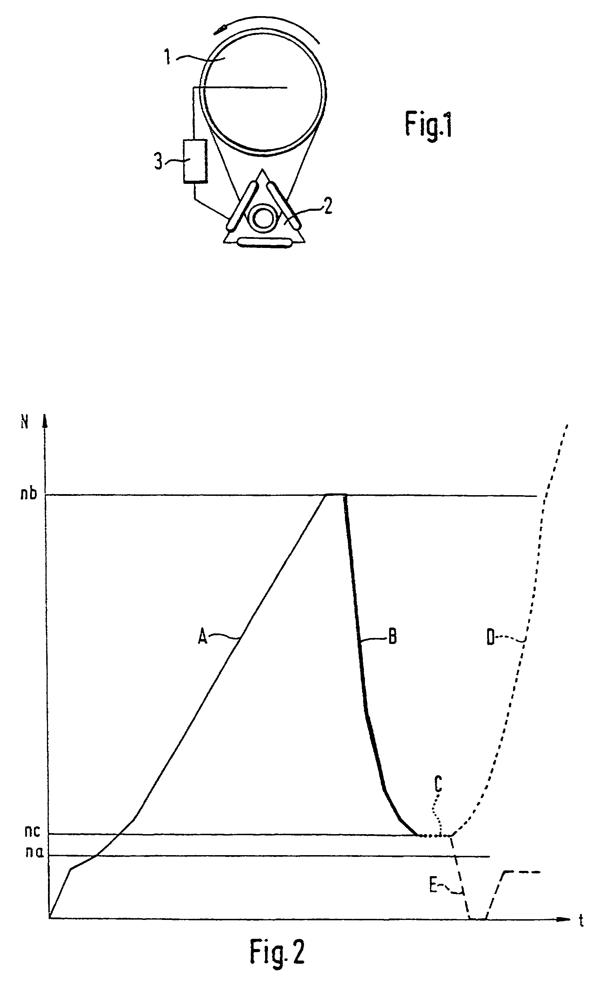

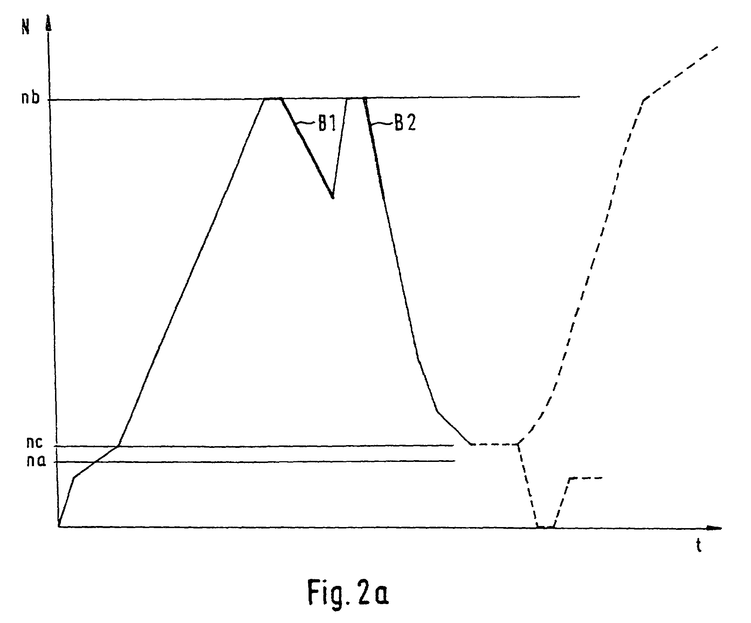

Vorteilhafte Ausgestaltungen der Erfindung ergeben sich aus den Unteransprüchen und der folgenden Beschreibung zweier Ausführungsbeispiele gemäß Fig. 2 und 2a. In der Zeichnung zeigen:

Figur 1 eine Waschmaschine schematisch,

Figur 2 einen Drehzahlverlauf zur Ermittlung der jeweiligen Beladung der Wäschetrommel und

Figur 2 einen Drehzahlverlauf, bei dem der Einfluß der Maschinenreibung auf die Beladungsmessung vollkommen eliminiert werden soll.

Eine Waschmaschine oder ein Wäschetrockner weist eine Wäschetrommel 1 auf, die von einem elektrischen Motor 2 antreibbar ist. Eine Steuerelektronik 3 erfaßt die Betriebszustände der Wäschetrommel 1 und/oder des Motors 2 und steuert die Bremsung des Motors 2.

Die Wäschetrommel 1 wird in einer ersten Phase A (Beschleunigungsphase) auf eine erste Drehzahl nb beschleunigt, die deutlich über der Anlegedrehzahl na liegt, wobei die Anlegedrehzahl na diejenige Drehzahl ist, bei der die Wäsche am Innenumfang der Wäschetrommel 1 unter Fliehkraftwirkung anliegt, ohne nach unten zu fallen.

Ist die erste, vorbestimmte Drehzahl nb erreicht, dann wird in einer zweiten Phase B (Bremsphase) der Motor 2 und damit die Wäschetrommel 1 durch elektrische Maßnahmen zwangsweise abgebremst. Das Abbremsen erfolgt vorzugsweise im Gegenstrombetrieb ohne zusätzliche Komponenten wie Bremswiderstände etc. Diese gezielte Abbremsung (Bremsphase B) kann bei einem mechanisch kommutierten Motor durch eine geeignete Schaltung dadurch geschehen, daß dessen Feldwicklung oder Ankerwicklung gegensinnig bestromt werden. Ein Synchronmotor oder ein elektronisch kommutierter Gleichstrommotor kann dadurch zwangsweise abgebremst werden, daß die Motorklemmen zumindest zeitweise kurzgeschlossen werden. Beim Asynchronmotor erfolgt die Bremsung mit Schlupf S > 1. Die Abbremsung erfolgt auf eine zweite Drehzahl nc, die über der Anlegedrehzahl na liegt.

Das vom Motor 2 ausgeübte Bremsdrehmoment Mb wird vorzugsweise so gewählt, daß es um ein Vielfaches größer ist als das Reibdrehmoment der Maschine (Maschinenreibung), das auftritt, wenn die Wäschetrommel 1 ohne aktive Bremsung ausläuft. Das Reibdrehmoment geht somit kaum in das Meßergebnis ein.

Die Steuerelektronik 3 ermittelt den Drehzahlgradienten w', d.h. die negative Winkelbeschleunigung der Wäschetrommel 1, der sich in der Bremsphase B einstellt, und errechnet aus diesem und dem Bremsmoment Mb das Massenträgheitsmoment J der rotierenden Massen bezogen auf die Drehachse der Wäschetrommel 1 nach der Gleichung:

$$J = Mb / w'.$$

Das Massenträgheitsmoment J nimmt im wesentlichen proportional mit der jeweiligen Beladung der Wäschetrommel 1 zu. Entsprechend des jeweils ermittelten Massenträgheitsmoments J bzw. der jeweiligen Beladung kann die Steuerelektronik 3 für den Wasch- bzw. Spülprozeß relevanten Parameter, wie Schleuderdrehzahl, Wasserniveau, Waschmittelzufuhr, etc., an die jeweilige Beladung anpassen.

Zur Optimierung des Schleudervorgangs kann in einer dritten Phase C, in der die Drehzahl nc konstantgehalten wird, durch eine Messung der Auslenkung der Wäschetrommel 1 eine etwaige Unwucht erfaßt werden und unter Berücksichtigung des jeweiligen Massenträgheitsmoments J die Unwuchtmasse bestimmt werden. Dementsprechend wird dann in einer vierten Phase D die bei der jeweiligen Beladung und Unwucht optimale Schleuderdrehzahl angefahren.

Zur Optimierung eines Waschvorgangs kann das Verfahren auch bei trockener Wäsche zum Einsatz kommen. Es werden dann die relevanten Parameter für das Waschen, wie Wasserniveau, Waschmittelzufuhr, zeitliches Ein-Ausschaltverhältnis des Motors 2 optimiert, was in Figur 2 als Phase E dargestellt ist.

Das Abbremsen in der Phase B kann mit konstantem Bremsdrehmoment erfolgen, wobei das Bremsdrehmoment dann der Steuerelektronik 3 bekannt ist und sie den Drehzahlgradienten bzw. die negative Winkelbeschleunigung der Bremsphase ermittelt.

Es kann auch vorgesehen sein, daß das Abbremsen in der Phase B entsprechend eines vorgegebenen Drehzahlverlaufs erfolgt und dann aus der hierfür nötigen Bremsenergie das Massenträgheitsmoment und damit die Beladung der Wäschetrommel 1 von der Steuerelektronik 3 ermittelt wird.

Der negative Drehzahlgradient bzw. die negative Winkelbeschleunigung in der Bremsphase B ist einerseits durch die Bremsleistung des Motors 2 begrenzt. Andererseits ist er durch die Forderung begrenzt, daß die auf die Wäsche am Umfang der Wäschetrommel 1 wirkenden tangentialen Beschleunigungskräft die tangentialen Kräfte aufgrund der Haftreibung der Wäsche in der Trommel nicht überschreiten sollen, damit die Wäsche in der rotierenden Wäschetrommel in Anlage bleibt. Es soll also verhindert werden, daß die Wäsche durch zu hohe Beschleunigungskräfte sich in der Wäschetrommel versetzt. Es sollen dabei die auf die Wäsche wirkenden tangentialen Beschleunigungskräfte Fa kleiner sein als die tangentialen Kräfte Fr auf die Wäsche aufgrund deren Haftreibung.

Die tangentialen Beschleunigungskräfte Fa ergeben sich aus der Formel:

$$Fa = m \times w' \times r,$$

wobei m die Masse der Wäsche, w' die Winkelbeschleunigung der Wäschetrommel um die Drehachse und r der Abstand der Wäsche zur Trommelachse ist. Die Reibkräfte Fr der Wäsche am Trommelumfang ergeben sich nach der Formel:

$$Fr = kr \times (Fz - Fg),$$

wobei

$$Fz = m \times w^2 \times r$$

und

$$Fg = m \times g$$

ist. Dabei ist Fr die Reibkraft der Wäsche am Trommelumfang in tangentialer Richtung, Fz die auf die Wäsche in radialer Richtung auf den Trommelumfang wirkende Zentrifugalkraft, Fg die auf die Wäsche wirkende Gravitationskraft, kr der Reibkoeffizient für die Haftung der Wäsche am Trommelumfang, m die Masse der Wäsche, w die Winkelgeschwindigkeit der Wäschetrommel, r der Abstand der Wäschetrommeldrehachse und g die Erdbeschleunigung.

Mit der Forderung Fa < Fr ergibt sich der maximal zulässige Drehzahlgradient w' zu

$$w' < kr \, (W^2 - g/r).$$

Hieraus ist ersichtlich, daß der Drehzahlgradient mit dem Quadrat der Drehzahl zu- bzw. abnimmt. Vorzugsweise ist vorgesehen, daß die Wäschetrommel 1 nach dieser Funktion abgebremst wird. Dadurch erreicht man die kürzestmögliche Meßdauer mit dem maximal zulässigen Bremsdrehmoment und damit einen möglichst geringen Einfluß der Maschinenreibung auf das Meßergebnis.

Falls eine besonders genaue Beladungsmessung notwendig ist, bzw. das Bremsdrehmoment des Antriebs nicht wesentlich höher ist als das Drehmoment der Maschinenreibung, kann mit einer Variante gemäß Figur 2a der Einfluß der Maschinenreibung auf das Meßergebnis vollkommen eliminiert werden. Zum Zeitpunkt B1 in Fig.2a läuft die Trommel ohne motorische Bremsung aus. Die Steuerung berechnet den Drehzahlgradient $W'_{B1}$ aufgrund der Maschinenreibung, Zum Zeitpunkt B2 in Fig. 2a wird die Trommel zuzüglich zur Maschinenreibung mit einem definierten motorischen Drehmoment abgebremst. Daraus resultiert ein Drehzahlgradient $W'_{B2}$, der größer ist als $W'_{B1}$. Das Massenträgheitsmoment und damit die Beladung ergibt sich dann aus dem Zusammenhang:

$$J = \frac{Mb}{W'_{B2} - W'_{B1}}$$

J: Massenträgheitsmoment der rotierenden Teile, im wesentlichen die Trommel mit Beladung

Mb: definierter Bremsdrehmoment

$W'_{B1}$: Winkelbeschleunigung mit Maschinenreibung als Bremsdrehmoment

$W'_{B2}$: Winkelbeschleunigung mit Maschinenreibung plus definiertem Motorbremsdrehmoment.

**Patentansprüche**

1. Verfahren zur Messung der dem Massenträgheitsmoment (J) proportionalen Beladung einer von einem Motor antreibbaren Wäschetrommel (1) einer Waschmaschine oder eines Wäschetrockners, wobei die Wäschetrommel (1) in einer ersten Phase (a) auf eine erste Drehzahl (nb) beschleunigt wird, die über der Anlagedrehzahl (na) liegt, und in einer anschließenden zweiten Phase (b) durch elektrische Bremsung des Motors (2) auf eine zweite Drehzahl (nc) abgebremst wird,
**dadurch gekennzeichnet,**
**dass** von einer Steuerelktronik (3) aus dem Verlauf des Abbremsvorganges hinsichtlich des Drehzahlverlaufes (n / t) und des aufgebrachten Bremsdrehmomentes (Mb) ein Maß für das Massenträgheitsmoment (J) der beladenen Wäschetrommel (1) als Quotient aus Bremsdrehmoment (Mb) und Drehzahlgradient (w') ermittelt wird.

2. Verfahren nach Anspruch 1,
**dadurch gekennzeichnet,**
**daß** das Bremsdrehmoment(Mb) in der zweiten Phase(B) konstantgehalten wird.

3. Verfahren nach Anspruch 1,
**dadurch gekennzeichnet,**
**daß** das Abbremsen nach einem vorgegebenen Drehzahlverlauf erfolgt und daß aus dem hierzu nötigen Bremsdrehmoment (Mb) das Massenträgheitsmoment(J) der beladenen Wäschetrommel(1) ermittelt wird.

4. Verfahren nach Anspruch 3,
**dadurch gekennzeichnet,**
**daß** das Bremsdrehmoment(Mb) der Wäschetrommel(1) proportional zum Quadrat der Trommeldrehzahl(W) von der Steuerelektronik(3) eingestellt wird.

5. Verfahren nach einem der vorhergehendenAnsprü-

che,
**dadurch gekennzeichnet,**
**daß** die zweite Drehzahl(nc) oberhalb der Anlagedrehzahl (na) liegt.

6. Verfahren nach einem der vorhergehenden Ansprüche,
**dadurch gekennzeichnet,**
**daß** das Bremsdrehmoment wesentlich größer als das Reibmoment der Wäschetrommel(1) gewählt wird.

7. Verfahren nach einem der vorhergehenden Ansprüche,
**dadurch gekennzeichnet,**
**daß** das Bremsdrehmoment durch entsprechende Speisung und/oder Verschaltung der Klemmen des Motors(2) erzeugt wird.

8. Verfahren nach Anspruch 7,
**dadurch gekennzeichnet,**
**daß** bei einem mechanisch kommutierten Motor(2) das Bremsdrehmoment dadurch erzeugt wird, daß die Feldwicklung oder die Ankerwicklung des Motors gegensinnig bestromt werden.

9. Verfahren nach Anspruch 7,
**dadurch gekennzeichnet,**
**daß** bei einem Synchronmotor oder einem elektrisch kommutierten Gleichstrommotor das Bremsdrehmoment dadurch erzeugt wird, daß die Klemmen des Motors(2) zumindest zeitweise kurzgeschlossen werden.

10. Verfahren nach Anspruch 7,
**dadurch gekennzeichnet,**
**daß** bei einem Asynchronmotor eine der Drehrichtung gegensinnige Speisung erfolgt, er also mit Schlupf S>1 betrieben wird.

11. Verfahren nach Anspruch 1,
**dadurch gekennzeichnet,**
**daß** das Abbremsen von der ersten höheren Drehzahl(nb) auf die zweite niedrigere Drehzahl(nc) mehr als einmal mit unterschiedlichem Bremsdrehmoment erfolgt, um den Einfluß der Maschinenreibung auf das Meßergebnis zu minimieren, in dem die Beladung aus den unterschiedlichen Drehzahlgradienten bzw. unterschiedlichen Bremsleistungen beider Bremsvorgänge abgeleitet wird.

12. Verfahren nach Anspruch 11,
**dadurch gekennzeichnet,**
**daß** die Trommel einmal ohne und einmal mit motorischer Bremsung von der höheren Drehzahl(nb) auf die niedrigere Drehzahl(nc) abgebremst wird.

**Claims**

1. Method for the measurement of the mass moment of inertia (J) of a drum (1) which can be driven by a motor of a washing machine or tumble dryer, proportional to the load of the drum , wherein the drum (1) is accelerated in a first phase (a) to a first speed (nb), which lies above the programmed speed (na) and in a subsequent second phase (b) is braked to a second speed (nc) by electrical braking of the motor (2),
**characterised in**
**that** a value for the mass moment of inertia (J) of the laden wash drum (1) is determined by control electronics (3) from the braking process gradient with respect to the speed characteristic (n/t) and to the braking torque (Mb) applied, as a quotient consisting of braking torque (Mb) and speed gradient (w').

2. Method according to claim 1,
**characterised in that**
the braking torque (Mb) is kept constant in the second phase (B).

3. Method according to claim 1,
**characterised in that**
the braking occurs according to a specified speed characteristic and that the mass moment of inertia (J) of the laden drum (1) is calculated from the braking torque (Mb) necessary for this.

4. Method according to claim 3,
**characterised in that**
the braking torque (Mb) of the drum (1) is set proportional to the square of the drum speed (W) by the electronic controller (3).

5. Method according to one of the preceding claims,
**characterised in that**
the second speed (nc) is greater than the design speed (na).

6. Method according to one of the preceding claims,
**characterised in that**
the braking torque is selected to be considerably greater than the moment of friction of the drum (1).

7. Method according to one of the preceding claims
**characterised in that**
the braking torque is generated by corresponding excitation and/or interconnection of the terminals of the motor (2).

8. Method according to claim 7,
**characterised in that**
in a mechanically commutated motor (2) the braking torque is generated by the fact that the field winding or the armature winding of the motor is connected in opposition.

**9.** Method according to claim 7,
**characterised in that**
in a synchronous motor or an electrically commutated DC motor, the braking torque is generated by short-circuiting the terminals of the motor (2) at least intermittently.

**10.** Method according to claim 7,
**characterised in that**
in an asynchronous motor excitation occurs in opposition to the direction of rotation, thus it is driven with slip S >1.

**11.** Method according to claim 1,
**characterised in that**
the braking from the first higher speed (nb) to the second lower speed (nc) occurs more than once with different braking torque, in order to minimise the effect of the machine friction on the measurement result, **in that** the loading is derived from the different speed gradients or different braking powers of both braking procedures.

**12.** Method according to claim 11,
**characterised in that**
the drum is braked once without and once with motor-actuated braking from the higher speed (nb) to the lower speed (nc).

**Revendications**

**1.** Procédé de mesure de la charge proportionnelle au moment d'inertie de masse (J) d'un tambour à linge (1) pouvant être entraîné par un moteur, d'une machine à laver ou d'un séchoir à linge, le tambour de lavage (1) étant accéléré au cours d'une première phase (a) à une première vitesse (nb) qui est supérieure à la vitesse de rotation d'application (na) et dans une deuxième phase (b) consécutive, il est freiné, par freinage électrique du moteur (2), à une deuxième vitesse de rotation (nc), **caractérisé en ce qu'**une électronique de commande (3) détermine, à partir de l'allure du processus de freinage, en ce qui concerne l'allure de la vitesse de rotation (n/t) et du couple de rotation de freinage (Mb) appliqué, un critère du moment d'inertie de masse (J) du tambour à linge (1) chargé, comme quotient du couple de rotation de freinage (Mb) et du gradient de vitesse de rotation (w').

**2.** Procédé selon la revendication 1, **caractérisé en ce que** le couple de rotation de freinage (Mb) est maintenu constant au cours de la deuxième phase (B).

**3.** Procédé selon la revendication 1, **caractérisé en ce que** le freinage s'effectue selon une allure prédéfinie de la vitesse de rotation et **en ce qu'**à partir du couple de rotation de freinage (Mb) nécessaire à cet effet, le moment d'inertie de masse (J) du tambour à linge 1 chargé est déterminé.

**4.** Procédé selon la revendication 3, **caractérisé en ce que** le couple de rotation de freinage (Mb) du tambour à linge (1) est réglé proportionnellement au carré de la vitesse de rotation (W) du tambour, par l'électronique de commande (3).

**5.** Procédé selon l'une des revendications précédentes, **caractérisé en ce que** la deuxième vitesse de rotation (nc) est supérieure à la vitesse de rotation d'application (na).

**6.** Procédé selon l'une des revendications précédentes, **caractérisé en ce que** le couple de rotation de freinage est choisi sensiblement supérieur au moment de friction du tambour à linge (1).

**7.** Procédé selon l'une des revendications précédentes, **caractérisé en ce que** le couple de rotation de freinage est produit par alimentation et/ou couplage convenables des bornes du moteur (2).

**8.** Procédé selon la revendication 7, **caractérisé en ce que** dans le cas d'un moteur (2) commuté mécaniquement, le couple de rotation de freinage est produit par le fait que l'enroulement de l'inducteur ou l'enroulement de l'induit du moteur est traversé par un courant en sens inverse.

**9.** Procédé selon la revendication 7, **caractérisé en ce que** dans le cas d'un moteur synchrone ou d'un moteur à courant continu commuté électriquement, le couple de rotation de freinage est produit par le fait que les bornes du moteur (2) sont court-circuitées au moins temporairement.

**10.** Procédé selon la revendication 7, **caractérisé en ce que** dans le cas d'un moteur asynchrone il se produit une alimentation dans le sens contraire au sens de rotation, c'est-à-dire qu'il tourne avec glissement (S > 1).

**11.** Procédé selon la revendication 1, **caractérisé en ce que** le freinage de la première vitesse de rotation supérieure (nb) à la deuxième vitesse de rotation plus basse (nc) s'effectue plus d'une fois avec un couple de rotation de freinage différent, afin de minimiser l'influence de la friction de la machine sur le résultat de la mesure, **en ce que** la charge est dérivée des différents gradients de la vitesse de rotation ou des différentes puissances de freinage des deux processus de freinage.

**12.** Procédé selon la revendication 11, **caractérisé en ce que** le tambour est freiné une fois sans freinage motorisé et une fois avec freinage motorisé, de la vitesse de rotation supérieure (nb) à la vitesse de rotation plus basse (nc).

Fig.1

Fig. 2

Fig. 2a